# EUROPÄISCHE PATENTSCHRIFT

(11) **EP 3 527 950 B1**
(45) Veröffentlichungstag und Bekanntmachung des Hinweises auf die Patenterteilung: **07.07.2021**
(21) Anmeldenummer: 18206233.1
(22) Anmeldetag: 14.11.2018
(51) Int. Cl.: G01D 5/244

(54) **LAGERLOSE WINKELMESSEINRICHTUNG**
BEARING-FREE ANGLE MEASUREMENT DEVICE
DISPOSITIF DE MESURE D'ANGLE SANS PALIER

(30) Priorität: 14.02.2018 DE 102018202239
(43) Veröffentlichungstag der Anmeldung: 21.08.2019
(73) Patentinhaber: Dr. Johannes Heidenhain GmbH, 83301 Traunreut (DE)
(72) Erfinder: THALER, Josef, 83301 Traunreut (DE); STRASSER, Erich, 83308 Trostberg (DE)

(56) Entgegenhaltungen:
- EP-A1- 1 154 241
- US-A1- 2002 074 701
- US-A1- 2008 054 765

## Beschreibung

### GEBIET DER TECHNIK

Winkelmesseinrichtungen können auf einem induktiven, magnetischen oder kapazitiven Messprinzip basieren und werden beispielsweise in Drehgebern zur Bestimmung der Winkelstellung zweier relativ zueinander drehbaren Maschinenteile verwendet.

Bei induktiven Winkelmesseinrichtungen werden häufig als Abtasteinheit Erregerspulen und Empfängerspulen in Form von Leiterbahnen auf einer gemeinsamen Leiterplatte aufgebracht, die beispielsweise mit einem Stator eines Drehgebers fest verbunden ist. Dieser Leiterplatte gegenüber liegend befindet sich eine weitere Platine, auf der als Winkelskala in periodischen Abständen elektrisch leitende Flächen als Teilungsstruktur aufgebracht sind, und welche mit dem Rotor des Drehgebers drehfest verbunden ist. Wenn an den Erregerspulen ein elektrisches Erregerfeld angelegt wird, werden in den Empfängerspulen während der Relativdrehung zwischen Rotor und Stator von der Winkelstellung abhängige Ausgangssignale erzeugt. Diese Ausgangssignale werden dann in einer Auswerteelektronik weiterverarbeitet.

Prinzipiell wird zwischen Winkelmesseinrichtungen mit Eigenlagerung und Winkelmesseinrichtungen ohne Eigenlagerung, im Folgenden als lagerlose Winkelmesseinrichtungen bezeichnet, unterschieden. Winkelmesseinrichtungen mit Eigenlagerung weisen üblicherweise vergleichsweise kleine Wälzlager auf, so dass die relativ zueinander drehbaren Bauteilgruppen innerhalb der betreffenden Winkelmesseinrichtung in definierter axialer und radialer Position relativ zueinander angeordnet sind. Dagegen muss bei den lagerlosen Winkelmesseinrichtungen bei der Montage an einer Maschine darauf geachtet werden, dass die zueinander drehbaren Bauteilgruppen in der richtigen Position insbesondere im korrekten axialen Abstand zueinander festgelegt werden.

### STAND DER TECHNIK

In der EP 1 750 101 A1 und in der EP 1 126 248 A2 ist jeweils eine Winkelmesseinrichtung beschrieben, welche dazu geeignet ist einen Abtastabstand zu bestimmen.

Aus der Offenlegungsschrift US 2008/0054765 A1 ist ein Encoder bekannt, der zu Montagezwecken einen elastischen Abstandshalter aufweist.

In der Druckschrift EP 1 154 241 A1 der Anmelderin ist eine Winkelmesseinrichtung beschrieben, die Wälzlager aufweist und eine spezielle, klemmende Ausgleichskupplung.

### ZUSAMMENFASSUNG DER ERFINDUNG

Der Erfindung liegt die Aufgabe zugrunde eine lagerlose, insbesondere eine induktive, Winkelmesseinrichtung zu schaffen, so dass eine genaue Bestimmung des Abtastabstandes ermöglicht ist, wobei eine optimierte mechanische Anbindung gewährleistet ist.

Diese Aufgabe wird erfindungsgemäß durch die Merkmale des Anspruches 1 gelöst.

Die Erfindung umfasst demnach eine lagerlose Winkelmesseinrichtung, die unter anderem eine Winkelskala, eine Abtasteinheit und eine Auswerteelektronik aufweist. Die Abtasteinheit und die Winkelskala sind in einem Abtastabstand relativ zueinander um eine Achse drehbar angeordnet. Weiterhin sind von der Abtasteinheit winkelabhängige Ausgangssignale erzeugbar, welche in der Auswerteelektronik weiterverarbeitbar sind. Dabei ist die Winkelmesseinrichtung in der Weise konfiguriert, dass basierend auf den Ausgangssignalen der Abtastabstand bestimmbar ist. Die Winkelmesseinrichtung weist ferner eine Ausgleichskupplung auf, wobei die Ausgleichskupplung an einem Maschinenteil befestigbar ist und in Richtung der Achse elastisch verformbar ausgestaltet ist.

Die Ausgleichskupplung ist so ausgebildet, dass diese die Winkelmesseinrichtung insbesondere diejenige Bauteilgruppe der Winkelmesseinrichtung, in welcher die Abtasteinheit drehfest fixiert ist, permanent gegen das Maschinenteil drängt.

Winkelabhängige Ausgangssignale sind insbesondere Signale, welche eine Information über die relative Winkelstellung zwischen der Winkelskala und der Abtasteinheit beinhalten.

Mit Vorteil ist die Ausgleichskupplung in Richtung der Achse über einen Hub von mindestens 0,5 mm, insbesondere von mindestens 1,0 mm, bevorzugt mindestens 1,5 mm elastisch verformbar ausgestaltet.

Die Ausgleichskupplung weist mehrere abgewinkelte Bauelemente auf. Dabei weisen die Bauelemente jeweils einen ersten Schenkel, der in einer Richtung mit einer radialen Richtungskomponente verläuft und einen zweiten Schenkel, der in einer Richtung mit einer axialen Richtungskomponente verläuft, auf.

Des Weiteren ist die Abtasteinheit drehfest mit einem Gehäuse verbunden und die Ausgleichskupplung ist weiterhin drehfest am Gehäuse festgelegt.

Mit Vorteil ist die Ausgleichskupplung torsionssteif ausgestaltet, das heißt, dass sich diese bei eingeleiteten tangential gerichteten Kräften nicht oder extrem geringfügig verformt. Zudem kann die Ausgleichskupplung bezüglich einer radialen Richtung steif ausgestaltet sein.

Gemäß einer weiteren Ausgestaltung der Erfindung ist die Winkelmesseinrichtung als eine induktive Winkelmesseinrichtung ausgebildet.

In vorteilhafter Ausgestaltung der Erfindung ist die Abtasteinheit so ausgestaltet, dass durch diese die Winkelskala über zumindest ihren halben Umfang abtastbar ist und so winkelabhängige Ausgangssignale erzeugbar sind. Mit Vorteil ist die Winkelskala über zumindest über 66% oder bevorzugt über 75% des Umfangs von der Abtasteinheit abtastbar. Insbesondere kann dann die Winkelmesseinrichtung in der Weise konfiguriert sein, dass basierend auf den Ausgangssignalen die Neigung der Achse relativ zur Abtasteinheit bestimmbar ist.

Häufig ist eine induktive Winkelmesseinrichtung so ausgestaltet, dass die Winkelskala durch die Abtasteinheit beziehungsweise durch die Sensorspulen über einen großen Teil ihres Umfangs abtastbar ist und so winkelabhängige Ausgangssignale erzeugbar sind. Alternativ kann die Winkelmesseinrichtung so ausgestaltet sein, dass die Winkelskala durch mehrere über den Umfang verteilte Abtaststellen abgetastet wird, so dass hierdurch die Neigung der Achse X bestimmbar ist.

Gemäß einer weiteren Ausgestaltung der Erfindung umfasst die Auswerteelektronik weiterhin eine Einheit zur Bestimmung der Signalamplituden der Ausgangssignale und der Abtastabstand ist basierend auf den Signalamplituden der Ausgangssignale bestimmbar.

Mit Vorteil ist die Einheit zur Bestimmung der Signalamplituden einer Reglereinheit zugeordnet, die derart konfiguriert ist, dass die Signalamplituden der Ausgangssignale durch Einwirken auf eine Stellgröße eine vorgegebene Abweichung von einem Soll-Amplitudenwert nicht überschreiten.

Gemäß einer vorteilhaften Ausgestaltung der Erfindung ist die Winkelmesseinrichtung selbst mit einer Elektronik ausgestattet, durch die der Abtastabstand bestimmt werden kann. Insbesondere ist mit Vorteil die besagte Auswerteelektronik so konfiguriert, dass durch diese der Abtastabstand bestimmbar ist. Der Abtastabstand kann dann beispielsweise über eine digitale Schnittstelle an eine externe (in Bezug auf die Winkelmesseinrichtung) Folgeelektronik zur weiteren elektronischen Verarbeitung übertragen werden.

Alternativ dazu umfasst die Erfindung auch Winkelmesseinrichtungen, bei denen der bestimmte Abtastabstand intern innerhalb der Winkelmesseinrichtung elektronisch weiterverarbeitet wird. Der bestimmte bzw. berechnete Abtastabstand dient also zur weiteren elektronischen Verarbeitung innerhalb oder außerhalb der Winkelmesseinrichtung.

Mit Vorteil wird von der Auswerteelektronik ein digitaler Wert für den Abtastabstand, also gleichsam eine binäre Zahl generiert, die dann in einem Mikroprozessor weiterverarbeitbar ist. Wenn dieser Mikroprozessor außerhalb der Winkelmesseinrichtung angeordnet ist, kann in vorteilhafter Weise die Winkelmesseinrichtung eine Schnittstelle aufweisen, über die der Wert an eine Folgeelektronik übertragbar ist.

Vorteilhafte Ausbildungen der Erfindung entnimmt man den abhängigen Ansprüchen.

Weitere Einzelheiten und Vorteile der erfindungsgemäßen lagerlosen Winkelmesseinrichtung ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine Schnittdarstellung der Winkelmesseinrichtung,
- Figur 2: eine erste perspektivische Darstellung der Winkelmesseinrichtung,

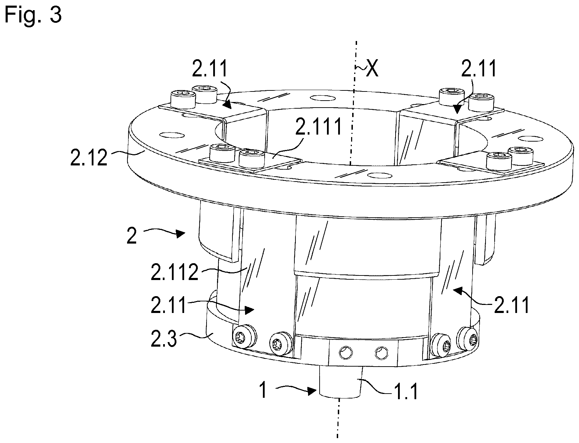

- Figur 3: eine zweite perspektivische Darstellung der Winkelmesseinrichtung.

### BESCHREIBUNG DER AUSFÜHRUNGSFORMEN

In den Figuren ist ein Ausführungsbeispiel der Winkelmesseinrichtung dargestellt, welche hier als eine induktive Winkelmesseinrichtung ausgestaltet ist. Die Winkelmesseinrichtung umfasst eine erste Bauteilgruppe 1 und eine zweite Bauteilgruppe 2, wobei die beiden Bauteilgruppen 1, 2 relativ zueinander um eine Achse X drehbar angeordnet sind. Zur Erreichung der relativen Drehbarkeit ist bei der vorliegenden Winkelmesseinrichtung keine Eigenlagerung, also kein Wälzlager oder Gleitlager, vorgesehen (lagerlose Winkelmesseinrichtung). Vielmehr wird die erste Bauteilgruppe 1 an einem ersten Maschinenteil befestigt und die zweite Bauteilgruppe 2 an einem zweiten Maschinenteil. Dabei ist das erste Maschinenteil relativ zum zweiten Maschinenteil drehbar angeordnet. Die Bauteilgruppen 1, 2 liegen mit einem Luftspalt getrennt einander gegenüber.

Die erste Bauteilgruppe 1 der Winkelmesseinrichtung weist eine Welle 1.1 auf, die im vorgestellten Ausführungsbeispiel ein konisches Ende zur starren und drehfesten Befestigung an einer Maschinen- oder Motorwelle aufweist. Demgemäß weist die Welle 1.1 eine konvexe Montagefläche 1.11 auf. An der Welle 1.1 ist eine Winkelskala 1.2 befestigt. Diese besteht aus einer ringförmigen Leiterplatte, auf der in periodischer Abfolge und in gleichen Teilungsschritten leitende und nicht leitende Bereiche, also Bereiche unterschiedlicher elektrischer Leitfähigkeit vorgesehen sind. Häufig kann die erste Bauteilgruppe 1 der Winkelmesseinrichtung auch als Rotor bezeichnet werden.

Der Winkelskala 1.2 ist in einem Abtastabstand D gegenüber liegend eine Abtasteinheit 2.2 angeordnet, die der zweiten Bauteilgruppe 2 zugeordnet ist, die hier auch als Stator bezeichnet werden kann. Die Abtasteinheit 2.2 ist hier ebenfalls als ringförmige Leiterplatte ausgebildet, welche Erreger- und Sensorspulen umfasst. Ferner ist die Abtasteinheit 2.2 an einem Gehäuse 2.3 befestigt. In dem Gehäuse 2.3 befinden sich zudem Bausteine einer Auswerteelektronik 2.21. Unter anderem ist der Auswerteelektronik 2.21 ein ASIC-Baustein zugeordnet. In diesem ASIC-Baustein ist eine Schaltung zur Bestimmung der relativen Winkelstellung zwischen der Abtasteinheit 2.2 und der Winkelskala 1.2 integriert sowie eine Reglereinheit. Außerdem befindet sich im Gehäuse 2.3 ein Steckverbinder 2.22, an den ein Verbindungskabel zu einer Folgeelektronik anschließbar ist.

Das Gehäuse 2.3 ist drehfest mit einer Ausgleichskupplung 2.1 verbunden. Die Ausgleichskupplung 2.1 umfasst im vorgestellten Ausführungsbeispiel vier Bauelemente 2.11 sowie einen Flansch 2.12. Die Bauelemente 2.11 sind aus einem Blech hergestellt und weisen jeweils eine abgewinkelte Form auf, so dass die Bauelemente 2.11 jeweils einen ersten Schenkel 2.111 und einen zweiten Schenkel 2.112 aufweisen. Die ersten Schenkel 2.111 verlaufen jeweils in einer Richtung mit einer radialen Richtungskomponente und die zweiten Schenkel 2.112 verlaufen jeweils in einer Richtung mit einer axialen Richtungskomponente, insbesondere parallel zur Achse X. Im vorgestellten Ausführungsbeispiel sind jeweils die ersten Schenkel 2.111 am Gehäuse 2.3 und die zweiten Schenkel 2.112 am Flansch 2.12 befestigt. Die Bauelemente 2.11 sind so konstruiert, dass die Ausgleichskupplung 2.1 in Richtung der Achse X elastisch verformbar ausgestaltet ist. Im vorgestellten Ausführungsbeispiel wird die Ausgleichskupplung 2.1 auch bei einen axialen Hub von 1,0 mm nur elastisch verformt und nimmt wieder die Ausgangsstellung ein, wenn die Auslenkkraft zurückgenommen wird.

Darüber hinaus ist die Ausgleichskupplung 2.1 torsionssteif und radialsteif.

Die Winkelskala 1.2 und die Abtasteinheit 2.2 sind relativ zueinander drehbar angeordnet, wobei die an der Welle 1.1 befestigte Winkelskala 1.2 im Betrieb der Winkelmesseinrichtung rotiert. Demnach entspricht hier die relative Drehzahl zwischen der Abtasteinheit 2.2 und der Winkelskala 1.2 auch der Drehzahl zwischen der Welle 1.1 und dem feststehenden Gehäuse 2.3 beziehungsweise dem Flansch 2.12. Durch die nicht rotierenden Erregerspulen auf der statorseitigen Abtasteinheit 2.2 wird im Betrieb der Winkelmesseinrichtung ein homogenes Wechselfeld erzeugt, das durch die Winkelskala 1.2 abhängig von der Winkelstellung, beziehungsweise vom Drehwinkel der Welle 1.1 moduliert wird. In den Sensorspulen, die sich ebenfalls auf der Abtasteinheit 2.2 befinden, werden durch das modulierte elektromagnetische Feld winkelabhängige Ausgangssignale erzeugt.

Im vorgestellten Ausführungsbeispiel ist die Winkelmesseinrichtung gemäß einer so genannten Rundumabtastung konfiguriert. Das heißt insbesondere, dass die Abtasteinheit 2.2 so ausgestaltet ist, dass die Winkelskala 1.2 durch die Abtasteinheit 2.2 beziehungsweise durch die Sensorspulen über nahezu den gesamten Umfang abtastbar ist und so winkelabhängige Ausgangssignale erzeugbar sind. Es wird also nahezu die komplette Teilungsstruktur der Winkelskala 1.2 zur Gewinnung eines Positionssignals von der Abtasteinheit 2.2 abgetastet.

Die so erzeugten Ausgangssignale werden dann der Auswerteelektronik 2.21 zugeführt, wo sie weiterverarbeitet werden. In der Reglereinheit werden die Ausgangssignale dahingehend geregelt, dass diese stets gleich bleibende Signalamplituden beziehungsweise Pegel aufweisen. Zu diesem Zweck werden zunächst der Einheit die Signalamplituden der Ausgangssignale als IstWerte bestimmt. Danach wird die Abweichung zwischen den zuvor bestimmten Signalamplituden und einem vorgegebenen Soll-Amplitudenwert bestimmt. Abhängig vom Betrag der Abweichung wird eine Stellgröße ermittelt, mit dem Ziel die Abweichung innerhalb vorgegebener Grenzen zu halten. Durch Einwirken auf diese Stellgröße, welche im vorgestellten Ausführungsbeispiel die Bestromung der Sendespulen ist, werden die Signalamplituden weitgehend konstant groß gehalten.

Beispielsweise kann die Winkelmesseinrichtung in Verbindung mit einer Bremse eines Elektromotors verwendet werden. In diesem Fall kann die Ausgleichskupplung 2.1 beziehungsweise der Flansch 2.12 der Ausgleichskupplung 2.1 am zweiten Maschinenteil befestigt werden. Das zweite Maschinenteil kann beispielsweise eine Bremsbacke sein. Dabei dient die Ausgleichskupplung 2.1 auch zur axialen Anfederung beziehungsweise zur Herstellung einer axialen Andruckkraft, die das Gehäuse 2.3 permanent gegen das zweite Maschinenteil drängt, unabhängig davon ob die Bremse eingefallen ist oder nicht. Die Welle 1.1 wird mit der Motorwelle fest verbunden. Üblicherweise dient bei derartigen Anordnungen die Bremse als Haltebremse und ist bei rotierender Motorwelle nicht im Eingriff.

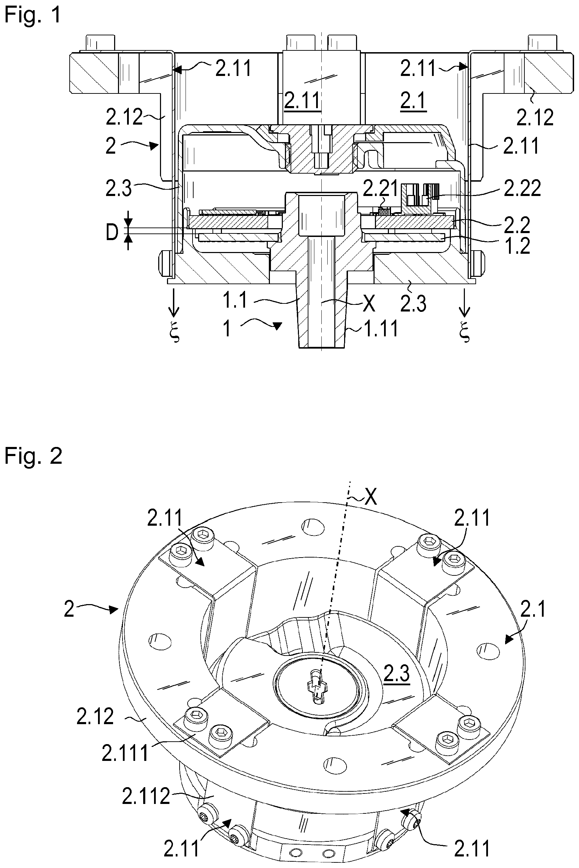

Wenn nun die Bremse einfällt bewegt sich das Gehäuse 2.3 in Richtung ξ (siehe Figur 1). Dagegen bleibt die erste Bauteilgruppe 1 in unveränderter axialer Position. Dies hat zur Folge, dass die in Axialrichtung elastischen Bauelemente 2.11 der Ausgleichskupplung 2.1 verformt werden, insbesondere bewegen sich die ersten Schenkel 2.111 im Bereich der Biegekante aus der Ebene des Ringes des Flansches 2.12 heraus. Gleichzeitig reduziert sich dann der Abtastabstand D.

Im Betrieb der Winkelmesseinrichtung wird zunächst der tatsächliche Ist-Wert des Abtastabstandes D bestimmt. Zu diesem Zweck werden die Ausgangssignale, hier um 90° phasenversetzte Inkrementalsignale, von der Abtasteinheit 2.2 der Auswerteelektronik 2.21 zugeführt. In der Reglereinheit wird ein zur Regelung der gleich bleibenden Signalamplituden erforderliche Betrag der Stellgröße gebildet. Im vorgestellten Ausführungsbeispiel werden in der Einheit die Signalamplituden bestimmt, indem aus jeweils acht aufeinander folgenden Ausgangssignale ein Amplitudenmittelwert gebildet wird. Danach wird überprüft, in welchem Maße die derart bestimmten Signalamplituden von einem vorgegebenen Soll-Amplitudenwert abweichen. Ist der Betrag der Abweichung zu groß, beziehungsweise liegen die Signalamplituden außerhalb eines vorbestimmten Regelfensters, so wird der Betrag der Stellgröße beziehungsweise der Verstärkungsfaktor entsprechend geändert, so dass sich die Pegel beziehungsweise Signalamplituden der Ausgangssignale dem Soll-Amplitudenwert nähern.

Des Weiteren wird in der Schaltung die Winkelstellung beziehungsweise Positionswerte der Welle 1.1 auf Basis der Ausgangssignale bestimmt.

Grundsätzlich kann festgestellt werden, dass der Betrag der Stellgröße beziehungsweise der Verstärkungsfaktor oder die Bestromung der Sendespulen mit wachsendem tatsächlichem Abtastabstand D steigt.

Der Abtastabstand D beinhaltet also die Information, ob die Bremse eingefallen ist oder nicht. Somit kann zunächst der jeweils aktuelle Zustand der Bremse (eingefallen oder frei) auf die oben beschriebene Weise ermittelt werden.

Darüber hinaus kann durch die exakte Bestimmung des Abtastabstandes D der Verschleißzustand der Bremse detektiert werden. Im vorgestellten Ausführungsbeispiel wird der Betrag der Stellgröße beziehungsweise der Verstärkungsfaktor kontinuierlich überwacht. Bei einer langsamen Änderung dieser Größe kann davon ausgegangen werden, dass diese Änderung nicht durch ein Einfallen der Bremse ausgelöst wurde, sondern durch andere Einflüsse, beispielsweise eine Änderung der Temperatur in der Winkelmesseinrichtung. Bei einer schnellen Änderung des Betrags der Stellgröße beziehungsweise des Verstärkungsfaktors kann dagegen von einem Bremsvorgang ausgegangen werden. In diesem Fall wird ab dem Auftreten eines bestimmten Gradienten des Abtastabstandes D bis zum Erreichen des Endes der entsprechenden Bewegung die Änderung des Abtastabstandes D gemessen. Je mehr die Bremse verschlissen ist, desto höher ist die Änderung des Abtastabstandes D infolge des Bremsvorganges. Auf diese Weise kann der Bremsverschleiß auf 0,1 mm genau bestimmt werden, so dass eine Aussage über die verbleibende Lebensdauer der Bremse möglich ist.

Häufig sind derartige Bremsen auch so konstruiert, dass aus Gründen einer erforderlichen Redundanz zwei Bremsbacken vorliegen, die gegenüber liegend jeweils an einer Seite der Achse X angreifen. Bei einem ungleichen Verschleiß kann es jedenfalls vorkommen, dass das Einfallen der Bremse eine Verkippung der Achse X relativ zum Gehäuse 2.3 beziehungsweise zur Abtasteinheit 2.2 bewirkt. Dadurch, dass die Abtasteinheit 2.2 so ausgestaltet ist, dass die Winkelskala 1.2 durch die Abtasteinheit 2.2 beziehungsweise durch die Sensorspulen über nahezu den gesamten Umfang abtastbar ist (Rundumabtastung) können die Ausgangssignale zur Bestimmung der Neigung der Achse X herangezogen werden. Entsprechend ist im vorgestellten Ausführungsbeispiel die Winkelmesseinrichtung in der Weise konfiguriert, dass basierend auf den Ausgangssignalen die Neigung der Achse X relativ zur Abtasteinheit 2.2 bestimmbar ist. Das Ausmaß der Neigung beziehungsweise der Neigungswinkel gibt demnach Auskunft über den Zustand beziehungsweise die Stellung der Bremse insbesondere der Gleichmäßigkeit des Verschleißes zweier Bremsbacken.

Mit der Winkelmesseinrichtung ist also feststellbar, ob sich die Bremse im Eingriff befindet oder nicht. Weiterhin kann auch ein defekt, zum Beispiel durch ein übermäßiges Ausmaß der oben beschriebenen Neigung, detektiert werden. Zudem kann aufgrund der hier gegebenen Messgenauigkeit auch der Verschleißzustand der Bremse ermittelt werden. Dabei ist weder zur Bestimmung des Abtastabstandes D noch zur Bestimmung der Neigung der Achse X ein separates Positionsmessgerät nötig.

Je nach den jeweiligen Erfordernissen kann über eine Schnittstelle, die am Winkelmessgerät eingerichtet ist, entweder der Abtastabstand D oder die Neigung der Achse X oder beide Größen z. B. über eine serielle Datenübertragung an die Folgeelektronik übermittelt werden. Ferner werden der Folgeelektronik auch die Winkelstellung und die Drehzahl der Welle 1.1 zur weiteren elektronischen Verarbeitung weitergeleitet.

## Patentansprüche

1. Lagerlose Winkelmesseinrichtung, umfassend
- eine Winkelskala (1.2),
- eine Abtasteinheit (2.2)
- ein Gehäuse (2.3) und
- eine Auswerteelektronik (2.21), wobei
die Abtasteinheit (2.2) drehfest mit dem Gehäuse (2.3) verbunden ist,
die Abtasteinheit (2.2) und die Winkelskala (1.2) in einem Abtastabstand (D) relativ zueinander um eine Achse (X) drehbar angeordnet sind und
von der Abtasteinheit (2.2) winkelabhängige Ausgangssignale erzeugbar sind, welche in der Auswerteelektronik (2.21) weiterverarbeitbar sind, wobei die Winkelmesseinrichtung in der Weise konfiguriert ist, dass basierend auf den Ausgangssignalen der Abtastabstand (D) bestimmbar ist **dadurch gekennzeichnet, dass** die Winkelmesseinrichtung weiterhin eine Ausgleichskupplung (2.1) aufweist, die drehfest am Gehäuse (2.3) festgelegt ist, wobei die Ausgleichskupplung (2.1) einen Flansch (2.12) sowie mehrere abgewinkelte Bauelemente (2.11) aufweist, wobei die Bauelemente (2.11) jeweils
einen ersten Schenkel (2.111), der in einer Richtung mit einer radialen Richtungskomponente verläuft und
einen zweiten Schenkel (2.112), der in einer Richtung mit einer axialen Richtungskomponente verläuft, aufweisen, wobei
jeweils die ersten Schenkel (2.111) am Gehäuse (2.3) und die zweiten Schenkel (2.112) am Flansch (2.12) befestigt sind, und
die Ausgleichskupplung (2.1) an einem Maschinenteil befestigbar ist und in Richtung der Achse (X) elastisch verformbar ausgestaltet ist und die Ausgleichskupplung (2.1) so ausgebildet ist, dass durch diese das Gehäuse (2.3) permanent gegen das Maschinenteil gedrängt werden kann.

2. Lagerlose Winkelmesseinrichtung gemäß dem Anspruch 1, wobei die Ausgleichskupplung (2.1) in Richtung der Achse (X) über einen Hub von mindestens 0,5 mm elastisch verformbar ausgestaltet ist.

3. Lagerlose Winkelmesseinrichtung gemäß einem der vorhergehenden Ansprüche, wobei die Ausgleichskupplung (2.1) torsionssteif ausgestaltet ist.

4. Lagerlose Winkelmesseinrichtung gemäß einem der vorhergehenden Ansprüche, wobei die Winkelmesseinrichtung als eine induktive Winkelmesseinrichtung ausgebildet ist.

5. Lagerlose Winkelmesseinrichtung gemäß einem der vorhergehenden Ansprüche, wobei die Abtasteinheit (2.2) so ausgestaltet ist, dass durch die Abtasteinheit (2.2) die Winkelskala (1.2) über zumindest ihren halben Umfang abtastbar ist und so winkelabhängige Ausgangssignale erzeugbar sind.

6. Lagerlose Winkelmesseinrichtung gemäß dem Anspruch 5, wobei die Winkelmesseinrichtung in der Weise konfiguriert ist, dass basierend auf den Ausgangssignalen die Neigung der Achse (X) relativ zur Abtasteinheit (2.2) bestimmbar ist.

7. Lagerlose Winkelmesseinrichtung gemäß einem der vorhergehenden Ansprüche, wobei die Auswerteelektronik (2.21) weiterhin eine Einheit zur Bestimmung der Signalamplituden der Ausgangssignale umfasst und der Abtastabstand (D) basierend auf den Signalamplituden der Ausgangssignale bestimmbar ist.

## Claims

1. Bearingless angle measuring device, comprising
- an angle scale (1.2),
- a scanning unit (2.2),
- a housing (2.3) and
- an evaluation electronics system (2.21), wherein the scanning unit (2.2) is connected in a rotationally fixed manner to the housing (2.3),
the scanning unit (2.2) and the angle scale (1.2) are arranged in a manner rotatable about an axis (X) at a scanning distance (D) relative to one another and angle-dependent output signals can be generated by the scanning unit (2.2) and can be further processed in the evaluation electronics system (2.21), wherein the angle measuring device is configured in such a way that the scanning distance (D) can be determined based on the output signals, **characterized in that**
the angle measuring device further has a compensating coupling (2.1) which is secured in a rotationally fixed manner to the housing (2.3), wherein the compensating coupling (2.1) has a flange (2.12) as well as a plurality of angled components (2.11), wherein the components (2.11) each have a first limb (2.111) that runs in a direction with a radial directional component and a second limb (2.112) that runs in a direction with an axial directional component, wherein
the first limbs (2.111) are each fixed to the housing (2.3) and the second limbs (2.112) are each fixed to the flange (2.12), and
the compensating coupling (2.1) can be fixed to a machine part and is formed in an elastically deformable manner in the direction of the axis (X) and the compensating coupling (2.1) is designed such that the housing (2.3) can be permanently pushed against the machine part by the said compensating coupling.

2. Bearingless angle measuring device according to Claim 1, wherein the compensating coupling (2.1) is formed in an elastically deformable manner over a stroke of at least 0.5 mm in the direction of the axis (X).

3. Bearingless angle measuring device according to either of the preceding claims, wherein the compensating coupling (2.1) is formed in a torsionally rigid manner.

4. Bearingless angle measuring device according to one of the preceding claims, wherein the angle measuring device is designed as an inductive angle measuring device.

5. Bearingless angle measuring device according to one of the preceding claims, wherein the scanning unit (2.2) is formed such that the angle scale (1.2) can be scanned over at least half of its circumference and in this way angle-dependent output signals can be generated by the scanning unit (2.2).

6. Bearingless angle measuring device according to Claim 5, wherein the angle measuring device is configured in such a way that the inclination of the axis (X) relative to the scanning unit (2.2) can be determined based on the output signals.

7. Bearingless angle measuring device according to one of the preceding claims, wherein the evaluation electronics system (2.21) further comprises a unit for determining the signal amplitudes of the output signals and the scanning distance (D) can be determined based on the signal amplitudes of the output signals.

## Revendications

1. Dispositif de mesure d'angle sans palier, comprenant
- une échelle angulaire (1.2),
- une unité de balayage (2.2),
- un boîtier (2.3), et
- une électronique d'évaluation (2.21), dans lequel
l'unité de balayage (2.2) est reliée au boîtier (2.3) de manière verrouillée en rotation,
l'unité de balayage (2.2) et l'échelle angulaire (1.2) étant disposées l'une par rapport à l'autre à une distance de balayage (D) en pouvant tourner autour d'un axe (X), et
l'unité de balayage (2.2) permet de générer des signaux de sortie en fonction de l'angle, qui peuvent être traités ultérieurement dans l'électronique d'évaluation (2.21), le dispositif de mesure d'angle étant configuré de telle sorte que sur la base des signaux de sortie, la distance de balayage (D) peut être déterminée,
**caractérisé en ce que** le dispositif de mesure d'angle présente en outre un accouplement compensateur (2.1) qui est immobilisé sur le boîtier (2.3) de manière verrouillée en rotation, l'accouplement compensateur (2.1) présentant une bride (2.12) ainsi que plusieurs composants coudés (2.11), les composants (2.11) présentant respectivement
une première branche (2.111) s'étendant dans une direction ayant une composante directionnelle radiale, et
une deuxième branche (2.112) s'étendant dans une direction ayant une composante directionnelle axiale, dans lequel
les premières branches (2.111) sont fixées au boîtier (2.3) et les deuxièmes branches (2.112) sont fixées à la bride (2.12), respectivement, et
l'accouplement compensateur (2.1) peut être fixé à une partie de machine et est configuré de manière élastiquement déformable en direction de l'axe (X), et l'accouplement compensateur (2.1) est réalisé de telle sorte qu'il peut plaquer en permanence le boîtier (2.3) contre la partie de machine.

2. Dispositif de mesure d'angle sans palier selon la revendication 1, dans lequel l'accouplement compensateur (2.1) est configuré de manière élastiquement déformable en direction de l'axe (X) sur une course d'au moins 0,5 mm.

3. Dispositif de mesure d'angle sans palier selon l'une quelconque des revendications précédentes, dans lequel l'accouplement compensateur (2.1) est configuré de manière rigide en torsion.

4. Dispositif de mesure d'angle sans palier selon l'une quelconque des revendications précédentes, dans lequel le dispositif de mesure d'angle est réalisé sous la forme d'un dispositif de mesure d'angle inductif.

5. Dispositif de mesure d'angle sans palier selon l'une quelconque des revendications précédentes, dans lequel l'unité de balayage (2.2) est configurée de telle sorte que l'unité de balayage (2.2) permet de balayer l'échelle angulaire (1.2) sur au moins la moitié de sa circonférence et permet ainsi de générer des signaux de sortie en fonction de l'angle.

6. Dispositif de mesure d'angle sans palier selon la revendication 5, le dispositif de mesure d'angle étant configuré de telle sorte que sur la base des signaux de sortie, l'inclinaison de l'axe (X) par rapport à l'unité de balayage (2.2) peut être déterminée.

7. Dispositif de mesure d'angle sans palier selon l'une quelconque des revendications précédentes, dans lequel l'électronique d'évaluation (2.21) comprend en outre une unité permettant de déterminer les amplitudes de signal des signaux de sortie, et la distance de balayage (D) peut être déterminée sur la base des amplitudes de signal des signaux de sortie.
